# EUROPÄISCHE PATENTSCHRIFT

(11) **EP 2 668 392 B1**
(45) Veröffentlichungstag und Bekanntmachung des Hinweises auf die Patenterteilung: **22.04.2015**
(21) Anmeldenummer: 12700663.3
(22) Anmeldetag: 17.01.2012
(51) Int. Cl.: F02M 61/08, F02M 61/18

(54) **EINSPRITZVENTIL MIT DURCHFLUSSBEGRENZER**
INJECTION VALVE HAVING A FLOW LIMITER
INJECTEUR MUNI D'UN LIMITEUR DE DÉBIT

(30) Priorität: 26.01.2011 DE 102011003163
(43) Veröffentlichungstag der Anmeldung: 04.12.2013
(73) Patentinhaber: Robert Bosch GmbH, 70442 Stuttgart (DE)
(72) Erfinder: VORBACH, Marco, 71691 Freiberg (DE)
(86) Internationale Anmeldenummer: PCT/EP2012/050601
(87) Internationale Veröffentlichungsnummer: WO 2012/101000

(56) Entgegenhaltungen:
- DE-A1- 10 306 959
- DE-A1- 19 843 570
- DE-C- 475 116

## Beschreibung

### Stand der Technik

Die vorliegende Erfindung betrifft ein Einspritzventil zum Einspritzen von Kraftstoff mit einem Durchflussbegrenzungselement.

Im Stand der Technik sind Einspritzventile bekannt, welche als Mehrlochventile mit einem Magnetantrieb oder als nach außen öffnendes Einspritzventil mit einem Piezoantrieb ausgeführt sind. Während einerseits die magnetisch angetriebenen Einspritzventile relativ kostengünstig herstellbar sind, weisen die Piezo-Einspritzventile durch die nach außen öffnenden Ventilstellglieder eine wesentliche bessere Verkokungsrobustheit aus. Bei magnetischen Einspritzventilen ist häufig ein Anschlag vorgesehen, welcher eine Streuung eines Kraftstoffdurchflusses im Neuzustand möglichst gering hält. Zusätzlich darf dabei ein Einfluss von Einlaufeffekten des Anschlags keine negativen Auswirkungen auf den Fahrzeugbetrieb haben. Andererseits sind bei nach außen öffnenden Ventilen mit einem zunehmenden Verschleiß die Anschlagflächen des Magnetankers veränderbar, so dass ein Nadelhub mit der Zeit zunehmen kann. Dies führt jedoch zu einer Zunahme der Durchflussmenge, was eine Änderung der Applikation nach sich ziehen kann.

Aus der DE 103 06 959 A1 ist bereits ein Ventil zum Einspritzen von Kraftstoff bekannt, das einen Ventilträger mit einem Ventilsitz und einer Zuströmbohrung sowie ein Ventilstellglied und ein Durchflussbegrenzungselement, welches am Ventilstellglied angeordnet ist, umfasst. Die Zuströmbohrung weist eine Stufe mit einer umlaufenden Ringkante auf. Dabei ist das Durchflussbegrenzungselement derart am Ventilstellglied angeordnet, dass bei geöffnetem Ventil eine Durchflussfläche zwischen der Ringkante und dem Durchflussbegrenzungselement von einer ersten Durchflussfläche auf eine zweite Durchflussfläche reduziert wird.

### Offenbarung der Erfindung

Das erfindungsgemäße Einspritzventil zum Einspritzen von Kraftstoff mit den Merkmalen des Anspruchs 1 weist demgegenüber den Vorteil auf, dass eine Durchflussmenge über die Lebensdauer des Ventils konstant gehalten werden kann. Ferner ergibt sich für den Kraftstoffpfad bei geöffnetem Ventil eine doppelte Drossel, nämlich an einem vom Ventilsitz abgehobenen Ventilstellglied und an einem Durchflussbegrenzungselement. Somit kann erfindungsgemäß, selbst wenn während der Nutzungsdauer des Einspritzventils ein zunehmender Verschleiß an Bauteilen auftritt, welcher zu einer Vergrößerung des Nadelhubs führen würde, durch die Anordnung des Durchflussbegrenzungselements am Ventilstellglied eine Kompensation durch Reduzierung eines Durchflussquerschnitts zwischen dem Durchflussbegrenzungselement und einer in einer Zuströmbohrung vorgesehenen Stufe. Dabei weist das erfindungsgemäße Ventil einen sehr einfachen und kostengünstigen Aufbau auf.

Die Unteransprüche zeigen bevorzugte Weiterbildungen der Erfindung.

Besonders bevorzugt ist das Ventil ein nach außen öffnendes Einspritzventil. Hierdurch kann insbesondere eine Verkokungsgefahr des Ventils deutlich reduziert werden und trotzdem eine Kompensation eines Verschleißes durch das erfindungsgemäße Durchflussbegrenzungselement sichergestellt werden.

Erfindungsgemäß wird eine gute Kompensation eines Verschleißes erreicht, wenn das Durchflussbegrenzungselement eine sich in Strömungsrichtung verjüngende Fläche aufweist, welche mit der Stufe in der Zuströmbohrung die Größe der Durchflussfläche in Abhängigkeit von einer Stellung des Ventilstellglieds definiert. Hierdurch kann die sich verjüngende Fläche entsprechend dem auftretenden Verschleiß gewählt werden, so dass sich eine exakte Kompensation eines Verschleißes, insbesondere bei einem Magnetventil, ergibt.

Gemäß der Erfindung ist die sich verjüngende Fläche mit einer Stufe zwischen zwei sich verjüngenden Teilflächen gebildet. Die zwei sich verjüngenden Teilflächen sind vorzugsweise jeweils konische Flächen, besonders bevorzugt mit unterschiedlichen Steigungen. Durch diese Ausgestaltung des Durchflussbegrenzungselements kann eine Durchflussmenge auch insbesondere im Hinblick auf eine Länge eines Ventilhubs, beispielsweise bei Mehrfacheinspritzungen pro Einspritzzyklus, eingestellt werden. Weiter bevorzugt sind die beiden sich verjüngenden Teilflächen in axialer Richtung gleich lang.

Um eine möglichst gute Strömungsführung bei geöffnetem Ventil zu erhalten, ist vorzugsweise ein Strömungsbereich in der Zuströmbohrung in Durchflussrichtung zwischen der Stufe in der Zuströmbohrung und dem Ventilsitz mit einem konstanten Durchmesser gebildet.

Das erfindungsgemäße Ventil ist vorzugsweise ein Magnetventil. Es sei jedoch angemerkt, dass grundsätzlich das erfindungsgemäße Ventil auch bei einem Piezo-Ventil verwendet werden kann.

### Zeichnung

Nachfolgend werden bevorzugte Ausführungsbeispiele der Erfindung unter Bezugnahme auf die begleitende Zeichnung im Detail beschrieben. In der Zeichnung ist:
- Figur 1: eine schematische Schnittansicht eines Einspritzventils gemäß einem ersten nicht erfindungsgemäßen Beispiel in geschlossenem Zustand,
- Figur 2: eine schematische Schnittansicht des Einspritzventils gemäß Figur 1 in geöffnetem Zustand,
- Figur 3: eine schematische Schnittansicht eines Einspritzventils gemäß einem zweiten Beispiel im geschlossenen Zustand,
- Figur 4: eine schematische Schnittansicht eines Einspritzventils gemäß einem dritten Beispiel im geschlossenen Zustand, und
- Figur 5: eine schematische Schnittansicht eines erfindungsgemäßen Einspritzventils im geschlossenen Zustand.

### Bevorzugte Ausführungsformen der Erfindung

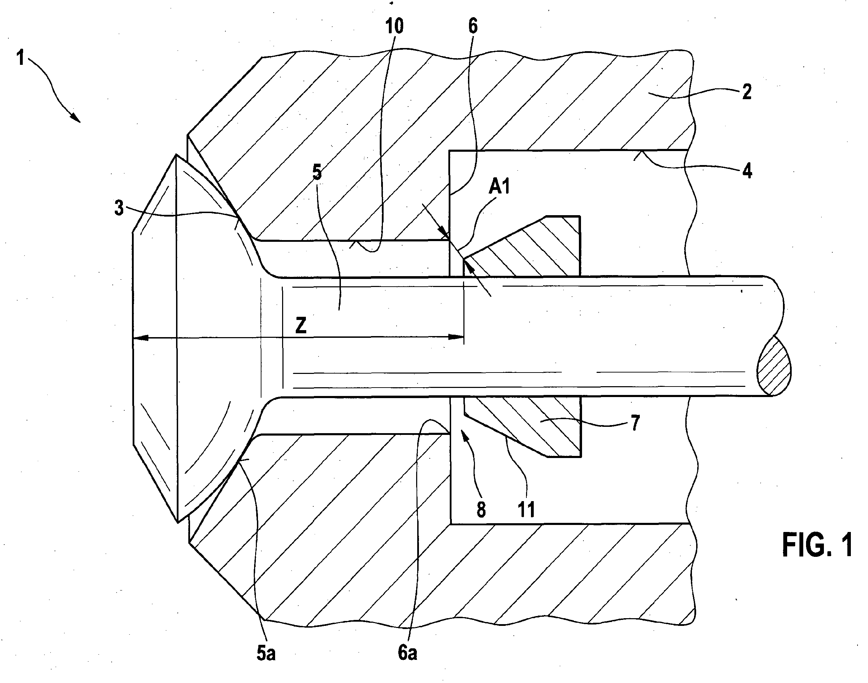

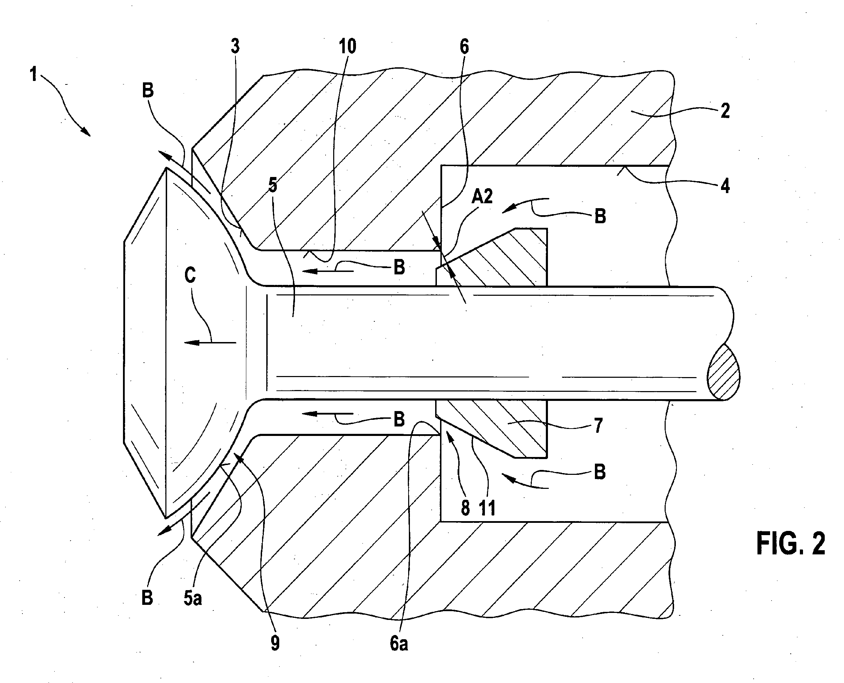

Nachfolgend wird unter Bezugnahme auf die Figuren 1 und 2 ein Einspritzventil 1 gemäß einem ersten bevorzugten Ausführungsbeispiel der Erfindung im Detail beschrieben.

Wie aus Figur 1 ersichtlich ist, umfasst das Einspritzventil 1 einen Ventilträger 2, an welchem eine stufenförmige Zustrombohrung 4 vorgesehen ist. Die Zustrombohrung 4 umfasst eine Stufe 6 sowie einen in Strömungsrichtung (siehe Figur 2, Pfeile B) zwischen der Stufe 6 und einem Ventilsitz 3 liegenden Strömungsbereich 10 mit konstantem Durchmesser. Am Ventilsitz 3 dichtet als Ventilstellglied 5 eine Ventilnadel in bekannter Weise ab. Wie weiter aus Figur 1 ersichtlich ist, ist an der Ventilnadel ein Durchflussbegrenzungselement 7 befestigt. Wie aus dem in Figur 1 gezeigten geschlossenen Zustand des Einspritzventils ersichtlich ist, ist dabei zwischen dem Durchflussbegrenzungselement 7 und einer ringförmig umlaufenden Ringkante 6a der Stufe 6 eine an einem Durchflussspalt 8 ringförmige Durchflussfläche A1 definiert. Das Durchflussbegrenzungselement 7 weist einen sich in Strömungsrichtung B konisch verjüngenden Bereich 11 auf.

Wie aus Figur 1 ersichtlich ist, ergibt sich dabei ein konstanter Abstand Z des Durchflussbegrenzungselements 7 zu einem am weitesten im Brennraum liegenden Endpunkt des Ventilstellglieds 5. Dieser Abstand Z wird nicht durch einen eventuell vorhandenen Verschleiß während des Betriebs des Einspritzventils verändert. Wenn das Ventilstellglied 5, wie aus Figur 2 ersichtlich ist, in Richtung des Pfeils C bewegt wird und das Einspritzventil öffnet, strömt Kraftstoff (Pfeile B) durch die Drossel zwischen dem konischen Bereich 11 des Durchflussbegrenzungselements 7 und der Ringkante 6a der Stufe 6 hindurch und am geöffneten Ventilsitz 3 vorbei, wobei am Ventilsitz 3 eine zweite Drossel (Nadelringspalt 9) zwischen einem kugelabschnittsförmigen Bereich 5a der Ventilnadel und dem Ventilsitz 3 vorhanden ist. Wie unmittelbar aus Figur 2 ersichtlich ist, hat sich am Durchflussspalt 8 eine Größe der Durchflussfläche von A1 auf A2 reduziert. Wenn nun beispielsweise aufgrund eines Verschleißes am Ventilaktor über die Zeit ein zunehmender Nadelhub auftritt, wird die bei geöffnetem Einspritzventil vorhandene Durchflussfläche A2 aufgrund der konischen Ausgestaltung des Durchflussbegrenzungselements 7 immer kleiner. Das heißt, ein verringerter Druckabfall am Nadelringspalt zwischen dem Ventilsitz 3 und dem Kugelabschnittsbereich der Ventilnadel wird durch einen größeren Druckabfall am Durchflussbegrenzungselement 7 kompensiert. Hierbei kann je nach Wahl eines Winkels des konischen Bereichs 11 eine beliebige Kennlinie modelliert werden, welche über die gesamte Lebensdauer des Einspritzventils eine konstante Einspritzmenge zulässt.

Somit lässt sich erfindungsgemäß ein nach außen öffnendes Ventil realisieren, welches vorzugsweise als Magnetventil ausgebildet ist. Dadurch kann insbesondere auch ein Anschlag für das Magnetventil vorgesehen werden, wobei das Magnetventil trotz der verschließbedingten Hubänderung der Ventilnadel einen Ausgleich über das Durchflussbegrenzungselement 7 für eine konstante Einspritzdauer über die Lebensdauer des Magnetventils sicherstellen kann. Dadurch kann eine verschleißbedingte Vergrößerung einer Fläche am Nadelringspalt 9 durch eine Reduzierung der Fläche am Durchflussbegrenzungselement 7 kompensiert werden. Dabei kann das Durchflussbegrenzungselement 7 sehr einfach aufgebaut werden und begrenzt die Fläche in Zusammenarbeit mit einer ebenfalls einfach herstellbaren Stufe 6 in der Zuströmbohrung 4. Ein in Strömungsrichtung B der Stufe 6 nachfolgend angeordneter Strömungsbereich 10 mit konstantem Durchmesser stellt dabei eine Strömungsberuhigung der Kraftstoffströmung vor dem Austritt aus dem Einspritzventil sicher.

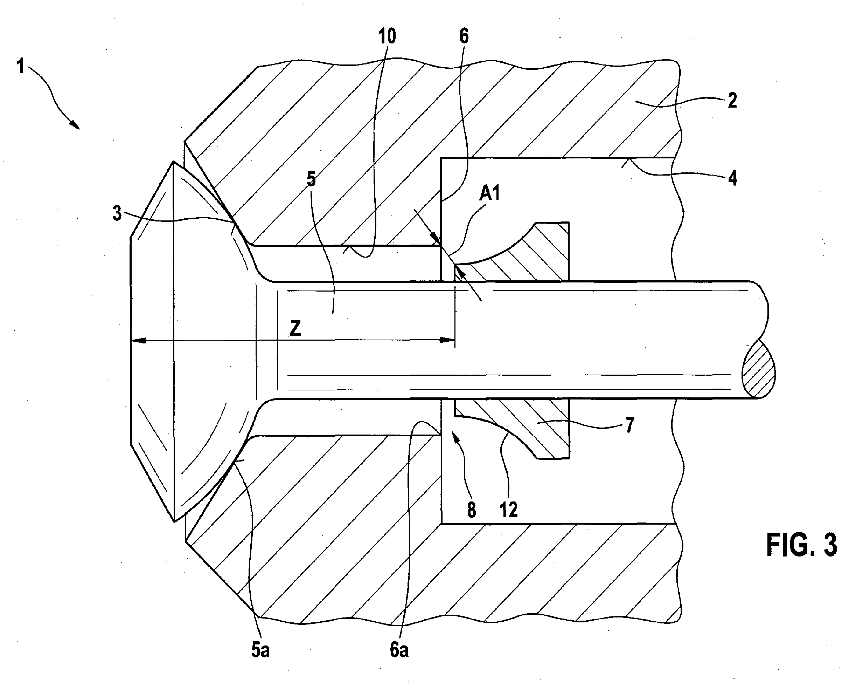

Die Figuren 3 bis 5 zeigen alternative Ausgestaltungen der Erfindung, wobei gleiche bzw. funktional gleiche Teile mit den gleichen Bezugszeichen wie im ersten Ausführungsbeispiel bezeichnet sind.

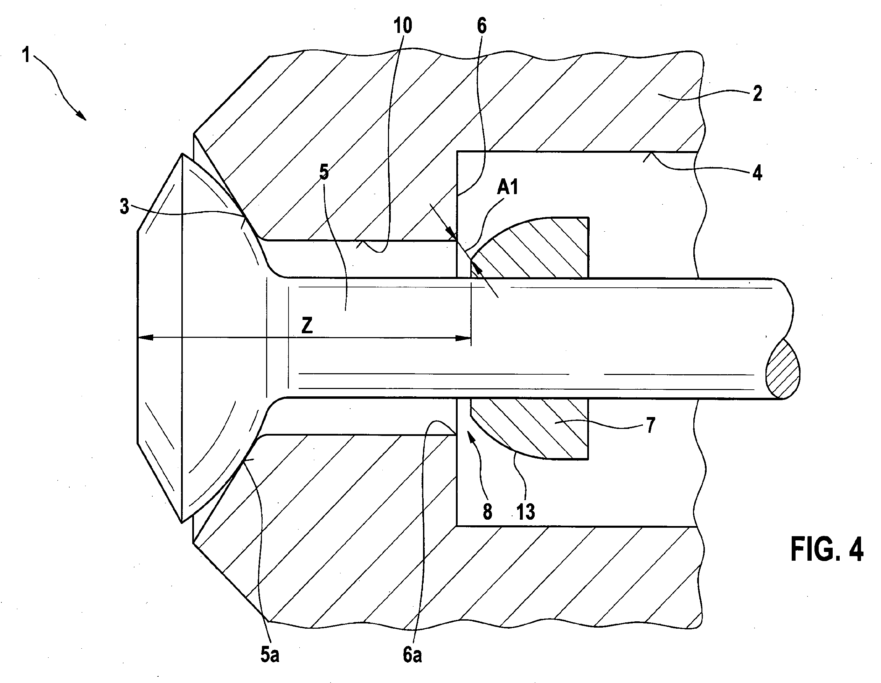

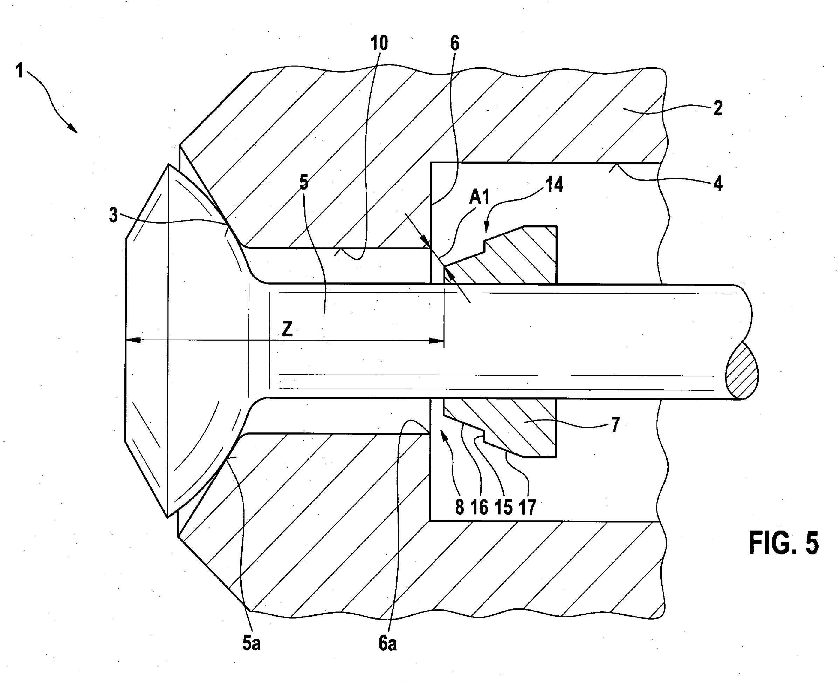

Figur 3 zeigt dabei ein Durchflussbegrenzungselement 7 mit einem konkaven Bereich 12, welcher mit der Stufe 6 die Durchflussfläche A1 begrenzt. Je nach Ausgestaltung des konkaven Bereichs 12 reduziert sich dabei bei einer Zunahme des Ventildrucks die Durchflussfläche A1 in größerem Maß. Eine umgekehrte Änderung der ringförmigen Durchflussfläche A1 ist beim dritten Ausführungsbeispiel in Figur 4 gegeben, welche einen konvexen Bereich 13 am Durchflussbegrenzungselement 7 aufweist, der mit der Stufe 6 die Durchflussfläche A1 definiert. Bei dem in Figur 5 gezeigten vierten Ausführungsbeispiel ist ein stufenförmiger Bereich 14 am Durchflussbegrenzungselement 7 ausgebildet, welcher eine Stufe 15, einen ersten konischen Bereich 16 und einen zweiten konischen Bereich 17 aufweist. Die Stufe 15 ist dabei zwischen dem ersten und zweiten konischen Bereich 16, 17 angeordnet. Die konischen Bereiche 15, 16 können dabei die gleiche Steigung oder alternativ auch eine unterschiedliche Steigung aufweisen. Bei dieser Ausgestaltung des Durchflussbegrenzungselements 7 kann insbesondere eine Durchflussmenge bei Teilhüben des Ventilstellglieds 5 eingestellt werden.

## Patentansprüche

1. Ventil zum Einspritzen von Kraftstoff, umfassend
- einen Ventilträger (2) mit einem Ventilsitz (3) und einer Zuströmbohrung (4),
- ein Ventilstellglied (5), und
- ein Durchflussbegrenzungselement (7), welches am Ventilstellglied (5) angeordnet ist,
- wobei die Zuströmbohrung (4) eine Stufe (6) mit einer umlaufenden Ringkante (6a) aufweist und
- wobei das Durchflussbegrenzungselement (7) derart am Ventilstellglied (5) angeordnet ist, dass bei geöffnetem Ventil eine Durchflussfläche (A1) zwischen der Ringkante (6a) und dem Durchflussbegrenzungselement (7) von einer ersten Durchflussfläche (A1) auf eine zweite Durchflussfläche (A2) reduziert wird,
**dadurch gekennzeichnet,**
**dass** das Durchflussbegrenzungselement (7) einen sich in Strömungsrichtung verjüngenden Bereich aufweist, welcher mit der Ringkante (6a) eine Größe der Durchflussfläche (A2) in Abhängigkeit von einer Stellung des Ventilstellglieds (5) definiert, wobei der sich verjüngende Bereich ein stufenförmiger Bereich (14) mit einer Stufe (15) und einem sich verjüngenden ersten und zweiten Teilbereich (16, 17) ist.

2. Ventil nach Anspruch 1, **dadurch gekennzeichnet, dass** das Ventil ein nach außen öffnendes Ventil ist.

3. Ventil nach Anspruch 1, **dadurch gekennzeichnet, dass** der erste und zweite Teilbereich (16, 17) jeweils konisch ausgebildet ist.

4. Ventil nach einem der vorhergehenden Ansprüche, **gekennzeichnet durch** einen Strömungsbereich (10) mit konstantem Durchmesser, welcher in Strömungsrichtung (B) zwischen der Stufe (6) und dem Ventilsitz (3) angeordnet ist.

5. Ventil nach einem der vorhergehenden Ansprüche, **dadurch gekennzeichnet, dass** das Ventil ein Magnetventil ist.

## Claims

1. Valve for the injection of fuel, comprising
- a valve carrier (2) with a valve seat (3) and with an inflow bore (4),
- a valve control element (5), and
- a throughflow limiting element (7) which is arranged on the valve control element (5),
- wherein the inflow bore (4) has a step (6) with an encircling annular edge (6a), and
- wherein the throughflow limiting element (7) is arranged on the valve control element (5) such that, when the valve is open, a throughflow area (A1) between the annular edge (6a) and the throughflow limiting element (7) is reduced from a first throughflow area (A1) to a second throughflow area (A2),
**characterized**
**in that** the throughflow limiting element (7) has a region which narrows in the flow direction and which, together with the annular edge (6a), defines a size of the throughflow area (A2) in a manner dependent on a position of the valve control element (5), wherein the narrowing region is a stepped region (14) with a step (15) and with narrowing first and second subregions (16, 17).

2. Valve according to Claim 1, **characterized in that** the valve is an outwardly opening valve.

3. Valve according to Claim 1, **characterized in that** the first and second subregions (16, 17) are each of conical form.

4. Valve according to one of the preceding claims, **characterized by** a flow region (10) of constant diameter arranged between the step (6) and the valve seat (3) in a flow direction (B).

5. Valve according to one of the preceding claims, **characterized in that** the valve is a solenoid valve.

## Revendications

1. Soupape d'injection de carburant, comportant
- un porte-soupape (2) pourvu d'un siège de soupape (2) et d'un alésage d'admission (4),
- un organe de réglage de soupape (5) et
- un élément de limitation de débit (7), lequel est disposé sur l'organe de réglage de soupape (5),
- l'alésage d'admission (4) comprenant un gradin (6) pourvu d'une arête annulaire périphérique (6a) et
- l'élément de limitation de débit (7) étant disposé sur l'organe de réglage de soupape (5) de telle sorte que, lorsque la soupape est ouverte, une surface d'écoulement (A1) entre l'arête annulaire (6a) et l'élément de limitation de débit (7) soit réduite d'une première surface d'écoulement (A1) à une deuxième surface d'écoulement (A2),
**caractérisée en ce que**
l'élément de limitation de débit (7) comprend une région se rétrécissant dans le sens d'écoulement, laquelle région définit avec l'arête annulaire (6a) une dimension de la surface d'écoulement (A2) en fonction d'une position de l'organe de réglage de soupape (5), la région se rétrécissant étant une région étagée (14) présentant un gradin (15) ainsi qu'une première et une deuxième région partielle (16, 17) se rétrécissant.

2. Soupape selon la revendication 1, **caractérisée en ce que** la soupape est une soupape s'ouvrant vers l'extérieur.

3. Soupape selon la revendication 1, **caractérisée en ce que** la première et la deuxième région partielle (16, 17) sont réalisées respectivement de manière conique.

4. Soupape selon l'une quelconque des revendications précédentes, **caractérisée par** une région d'écoulement (10) de diamètre constant, laquelle est disposée entre le gradin (6) et le siège de soupape (3) dans le sens d'écoulement (B).

5. Soupape selon l'une quelconque des revendications précédentes, **caractérisée en ce que** la soupape est une électrovanne.
